# EUROPEAN PATENT APPLICATION

(11) **EP 2 387 107 A1**
(43) Date of publication of application: **16.11.2011**
(21) Application number: 11163765.8
(22) Date of filing: 26.04.2011
(51) Int. Cl.: H01Q 1/38, H01Q 21/28, G06F 3/044, G06F 3/045, G06F 3/033, H01Q 1/22, G06F 1/16

(54) **Touch panel having hidden antenna**

(30) Priority: 30.04.2010 TW 099207954
(71) Applicant: Yeh, Fu-Lin, New Taipei City (TW)
(72) Inventor: Yeh, Fu-Lin, New Taipei City (TW)
(74) Representative: Caldwell, Judith Margaret

(57) **Abstract**

A touch panel having hidden antenna has a multi-layer body and at least one antenna unit (40). The multi-layer body has a first electrode (10), a second electrode (30) and an intermediate layer (20) sandwiched by the first electrode (10) and the second electrode (30). The at least one antenna unit (40) is mounted on different positions inside the multi-layer body to constitute a plane antenna or a three-dimensional antenna. Accordingly, hidden inside the multi-layer body, the at least one antenna unit (40) is not prone to defacement and damage, occupies little space, has a good communication quality and is durable.

## Description

### 1. Field of the Invention

The present invention relates to a touch panel, and more particularly to a touch panel having hidden antenna capable of occupying little space and providing an improved communication quality.

### 2. Description of the Related Art

With no wire or cable required for routing, wireless communication products are in great market demand and explore a variety of applications, such as access points of a wireless network, MINI PCI, PCMCIA, USB wireless network interface cards or 3.5G mobile communication equipment and the like.

Antenna is a necessary part to realize a wireless communication product. While the infrastructure of wireless networks becomes more and more mature, antenna soon becomes a must in designing and implementing electronic products featuring wireless communication. To aim for a slim and miniaturized design, most electronic products embedded with their antennae therein run counter to the pursued design idea. Hence, some notebook computer manufacturers incorporate antenna modules in the screens of notebook computers in an attempt to lighten the burden in fulfilling the downsizing goal.

Although an antenna module can be mounted inside a screen without occupying the space of a main board, the antenna still needs to be adequately positioned to receive wireless signals smoothly. As a result, some plane antennae are directly printed on outer surfaces of display panels to avoid bad receiving quality arising from the blockage effect on the antennae. However, the plane antennae printed on the outer surfaces of the display panels are prone to scratch and damage in operation, and the resulting communication quality deteriorates accordingly. Therefore, to satisfy the requirements for both of the signal receiving quality and the operation durability, an improved touch panel needs to be addressed.

An objective of the present invention is to provide a touch panel having hidden antenna providing better antenna signals when collaborated with a display panel.

To achieve the foregoing objective, the touch panel having hidden antenna has a multi-layer body and at least one antenna unit.

The multi-layer body has a second electrode, an intermediate layer and a first electrode sequentially stacked from a bottom to a top of the multi-layer body.

The at least one antenna unit is mounted inside the multi-layer body.

The intermediate layer has a top surface, a bottom surface and four sides.

Preferably, each of the at least one antenna unit is mounted on the top surface of the intermediate layer.

Preferably, each of the at least one antenna unit is mounted on the bottom surface of the intermediate layer.

Preferably, the touch panel has multiple antenna units respectively mounted on a perimeter of the top surface and the sides of the intermediate layer, and each antenna unit mounted on a corresponding side of the intermediate layer adjoins another adjacent antenna unit mounted on the top surface of the intermediate layer to constitute a first three-dimensional antenna.

Preferably, the touch panel has multiple antenna units respectively mounted on a perimeter of the bottom surface and the sides of the intermediate layer, and each antenna unit mounted on a corresponding side of the intermediate layer adjoins another adjacent antenna unit mounted on the bottom surface of the intermediate layer to constitute a second three-dimensional antenna.

Preferably, the touch panel has multiple antenna units respectively mounted on a perimeter of the top surface, a perimeter of the bottom surface and the sides of the intermediate layer, and each antenna unit mounted on a corresponding side of the intermediate layer adjoins two adjacent antenna units respectively mounted on the top surface and the bottom surface of the intermediate layer to constitute a third three-dimensional antenna.

As the at least one antenna unit is mounted on different positions inside the multi-layer body to constitute a plane antenna or a three-dimensional antenna, the at least one antenna unit is not prone to defacement and damage, is durable, has a good communication quality and occupies little space.

Other objectives, advantages and novel features of the invention will become more apparent from the following detailed description when taken in conjunction with the accompanying drawings.

### IN THE DRAWINGS

Fig. 1 is a cross-sectional side view of a first embodiment of a touch panel in accordance with the present invention;
Fig. 2 is a top view of the touch panel in Fig. 1;
Fig. 3 is a top view of a second embodiment of a touch panel in accordance with the present invention;
Fig. 4 is a top view of a third embodiment of a touch panel in accordance with the present invention;
Fig. 5 is an exploded perspective view of a fourth embodiment of a touch panel in accordance with the present invention;
Fig. 6 is an exploded perspective view of a fifth embodiment of a touch panel in accordance with the present invention; and
Fig. 7 is a perspective view of a touch panel in accordance with the present invention mounted on a notebook computer.

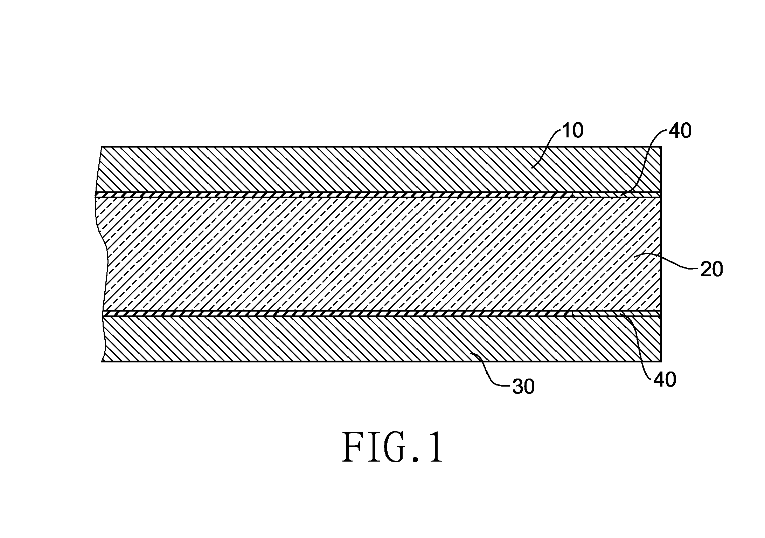

With reference to Fig. 1, a first embodiment of a touch panel having hidden antenna in accordance with the present invention has a multi-layer body and at least one antenna unit 40.

The multi-layer body has a second electrode 30, an intermediate layer 20 and a first electrode 10 sequentially stacked from a bottom to a top of the multi-layer body. The intermediate layer 20 is mounted between and sandwiched by the first electrode 10 and the second electrode 30. In the present embodiment, the multi-layer body is a capacitive touch panel, the intermediate layer is a dielectric layer, and the first electrode 10 and the second electrode 30 are composed of a transparent substrate or a conducting matter having conductive indium tin oxide (ITO). The multi-layer body may be a resistive touch panel, and the intermediate layer 20 may be a separation layer composed of multiple spacers.

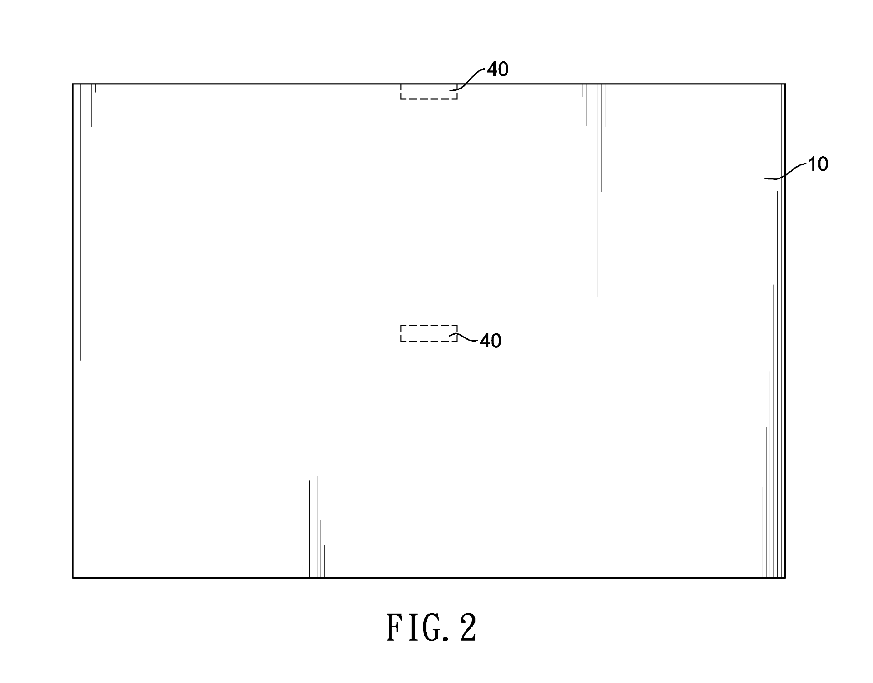

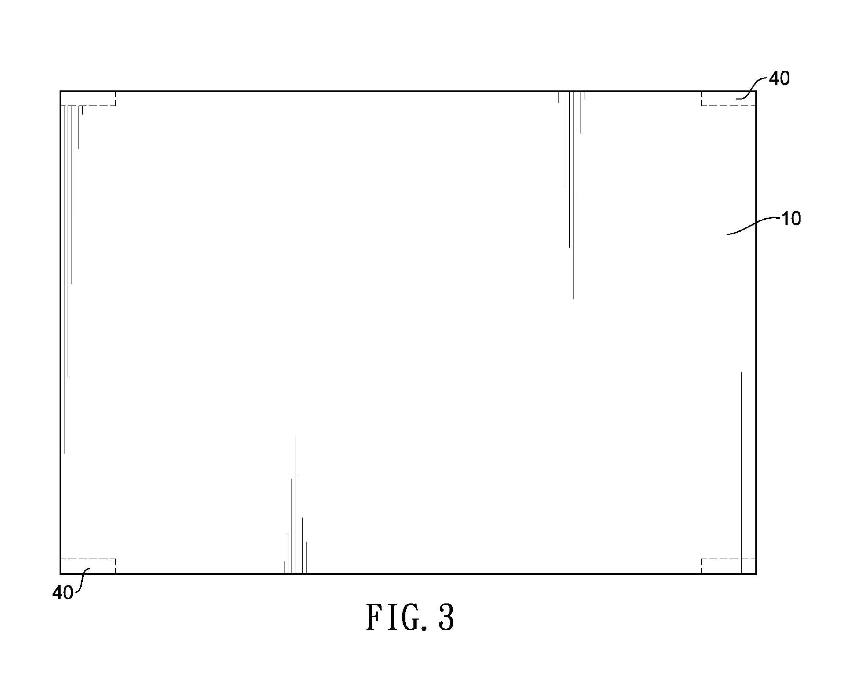

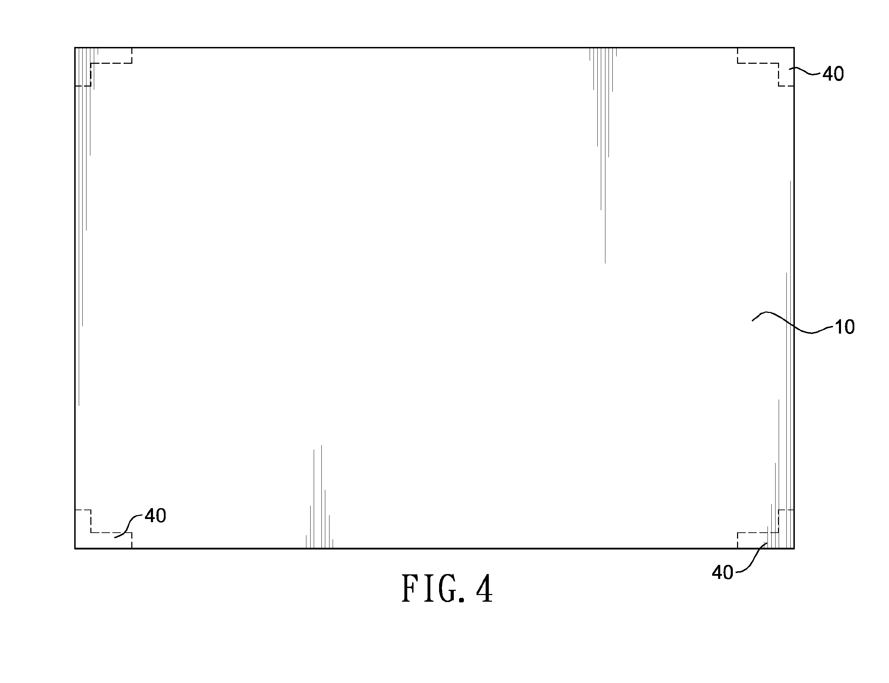

The at least one antenna unit 40 is mounted inside the multi-layer body. The at least one antenna unit 40 may be mounted between the first electrode 10 and the intermediate layer 20 or between the second electrode 30 and the intermediate layer 20. In the present embodiment, the touch panel has multiple independent antenna units 40. With reference to Fig. 2, the antenna units 40 are mounted on a perimeter of a top surface of the intermediate layer 20 or any other place on the top surface. With reference to Figs. 3 and 4, the antenna units 40 are mounted on four corners of the top surface of the intermediate layer 20, and are rectangular as shown in Fig. 3 or are L-shaped as shown in Fig. 4.

As the at least one antenna unit 40 is mounted inside the multi-layer body, there is no cause for concern about scratch, damage and moisture penetration. Therefore, the damage of the at least one antenna unit 40 caused by oxidation can be avoided.

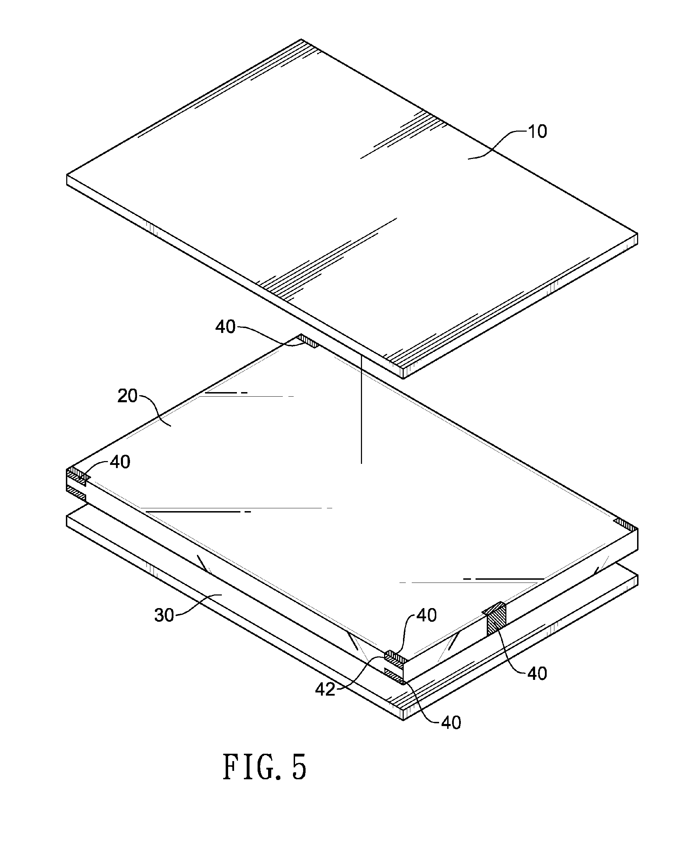

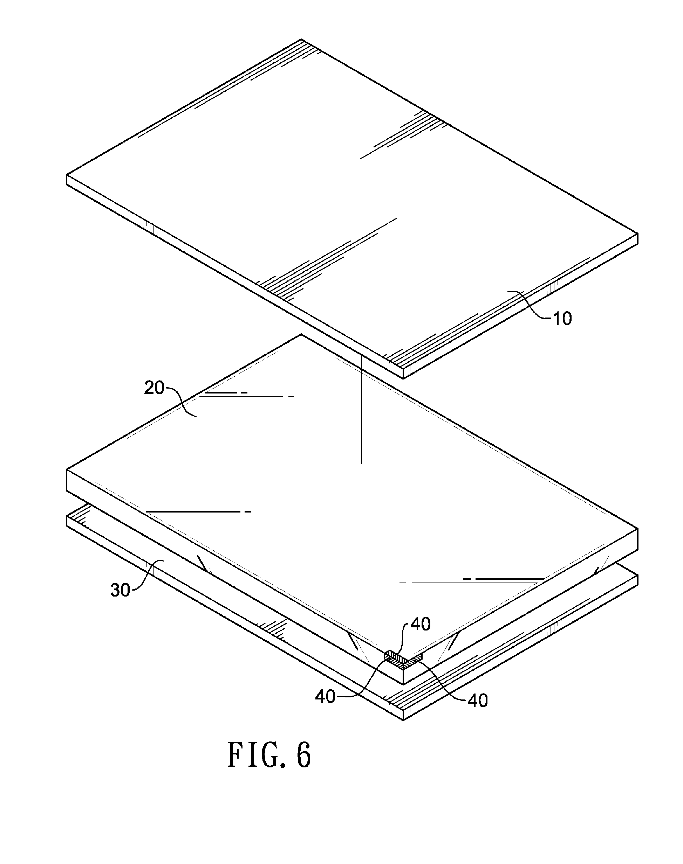

With reference to Fig. 5, multiple antenna units 40 are respectively mounted on a top surface, a bottom surface and four sides of the intermediate layer 20. Each antenna unit 40 mounted on a side of the intermediate layer 20 may adjoin another adjacent antenna unit 40 mounted on a perimeter of the top surface or the bottom surface of the intermediate layer 20 to constitute a three-dimensional antenna. Each antenna unit 40 mounted on a side of the intermediate layer 20 may adjoin the adjacent antenna units 40 mounted on perimeters of the top surface and the bottom surface of the intermediate layer 20 to constitute a three-dimensional antenna. With reference to Fig. 6, an antenna unit 40 mounted on a perimeter of a top surface of the intermediate layer 20 adjoins two antenna units 40 mounted on two adjacent sides of the intermediate layer 20 to constitute a three-dimensional antenna.

In collaboration with the design of three-dimensional antenna, the touch panel of the present invention possesses the advantages of good communication quality, little space occupation, little communication breakdown, and durability.

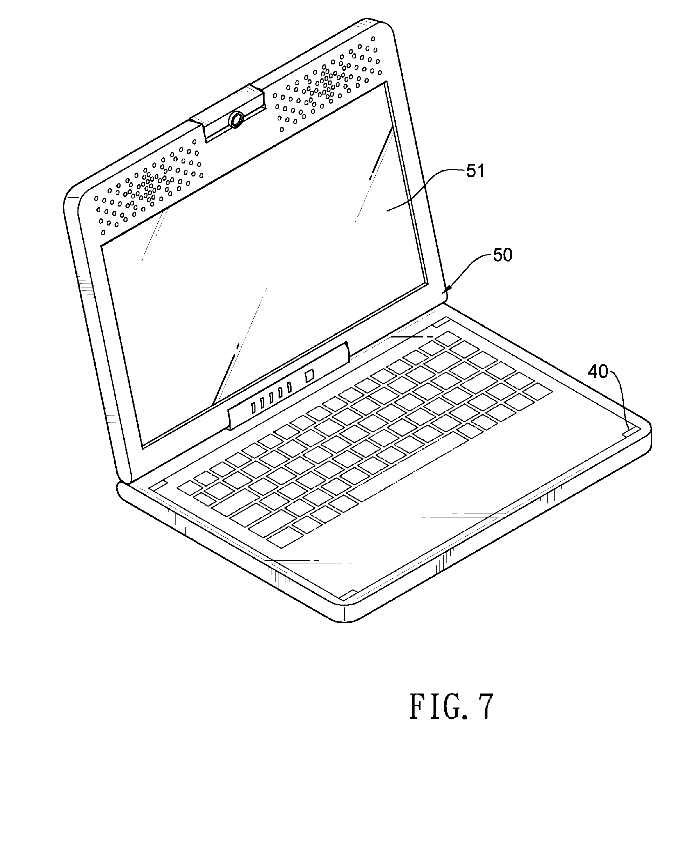

With reference to Fig. 7, the touch panel of the present invention can be directly mounted on a place on a notebook computer where a keyboard is supposed to be mounted, and can be switched by software to serve as a keyboard or a digitizer. As the touch panel is fully exposed when the screen is lifted up, the hidden antenna has an improved communication quality.

In sum, the touch panel of the present invention having the at least one antenna unit 40 embedded therein can be operated in collaboration with a regular screen 51. As the touch panel is not covered by the screen 51 during operation, the touch panel has a good communication quality and is not easily scratched and damaged.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A touch panel having hidden antenna, **characterized in that** the touch panel comprises:
a multi-layer body having a second electrode (30), an intermediate layer (20) and a first electrode (10) sequentially stacked from a bottom to a top of the multi-layer body; and
at least one antenna unit (40) mounted inside the multi-layer body;
wherein the intermediate layer (20) has a top surface, a bottom surface and four sides.

2. The touch panel as claimed in claim 1, wherein each of the at least one antenna unit (40) is mounted on the top surface of the intermediate layer (20).

3. The touch panel as claimed in claim 1, wherein each of the at least one antenna unit (40) is mounted on the bottom surface of the intermediate layer (20).

4. The touch panel as claimed in claim 1, comprising multiple antenna units (40) respectively mounted on a perimeter of the top surface and the sides of the intermediate layer (20), wherein each antenna unit (40) mounted on a corresponding side of the intermediate layer (20) adjoins another adjacent antenna unit (40) mounted on the top surface of the intermediate layer (20) to constitute a first three-dimensional antenna.

5. The touch panel as claimed in claim 1, comprising multiple antenna units (40) respectively mounted on a perimeter of the bottom surface and the sides of the intermediate layer (20), wherein each antenna unit (40) mounted on a corresponding side of the intermediate layer (20) adjoins another adjacent antenna unit (40) mounted on the bottom surface of the intermediate layer (20) to constitute a second three-dimensional antenna.

6. The touch panel as claimed in claim 1, comprising multiple antenna units (40) respectively mounted on a perimeter of the top surface, a perimeter of the bottom surface and the sides of the intermediate layer (20), wherein each antenna unit (40) mounted on a corresponding side of the intermediate layer (20) adjoins two adjacent antenna units (40) respectively mounted on the top surface and the bottom surface of the intermediate layer (20) to constitute a third three-dimensional antenna.

7. The touch panel as claimed in claims 1 to 6, wherein the multi-layer body is a capacitive touch panel, and the intermediate layer (20) is a dielectric layer.

8. The touch panel as claimed in claim 1 to 6, wherein the multi-layer body is a resistive touch panel, and the intermediate layer (20) is a separation layer composed of multiple spacers.
